(19) **Europäisches Patentamt European Patent Office Office européen des brevets**

(11) **EP 2 823 972 B1**

(12) **EUROPEAN PATENT SPECIFICATION**

(45) Date of publication and mention
of the grant of the patent:
**16.11.2016 Bulletin 2016/46**

(51) Int Cl.:
**B60C 1/00** (2006.01)

(21) Application number: **14164492.2**

(22) Date of filing: **11.04.2014**

(54) **Rubber composition for tire, and pneumatic tire**

Kautschukzusammensetzung für Reifen und Luftreifen damit

Composition de caoutchouc pour pneu et pneu

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2013 JP 2013145646**

(43) Date of publication of application:
**14.01.2015 Bulletin 2015/03**

(73) Proprietor: **SUMITOMO RUBBER INDUSTRIES,
LTD.
Kobe-shi,
Hyogo 651-0072 (JP)**

(72) Inventors:
• **Kitago, Ryota
Kobe-shi, Hyogo 651-0072 (JP)**
• **Ishino, Soh
Kobe-shi, Hyogo 651-0072 (JP)**
• **Yamana, Ayuko
Kobe-shi, Hyogo 651-0072 (JP)**

(74) Representative: **Manitz, Finsterwald & Partner
GbR
Martin-Greif-Strasse 1
80336 München (DE)**

(56) References cited:
**EP-A- 2 165 853      EP-A1- 2 615 131
US-A- 4 545 927      US-A1- 2009 126 844**

**Description**

TECHNICAL FIELD

The present invention relates to a rubber composition for a tire, and a pneumatic tire formed from the rubber composition.

BACKGROUND ART

Recent fuel-efficient tires have high electrical resistance, which causes the problem of lack of safety such as ignition of fuel by a spark of static electricity during fueling of vehicles equipped with these tires.
In order to overcome such a problem, Patent Literature 1 suggests a tire provided with a conductive thin film to ensure conductivity. However, such a conductive thin film acts as a drag on improvement in fuel efficiency because of the recent desire for further improvement in fuel efficiency. Increasing the gauge is also effective for ensuring conductivity, but this also leads to poor fuel efficiency as well as another problem of cost increase.
Moreover, the use of a conductive carbon black as filler has been suggested. However, conductive carbon black is generally in the form of fine particles whose surfaces have low interaction with rubber, and thus is less likely to be dispersed in rubber. For this reason, this method has the problems of reduced breaking performance and flex crack resistance.

CITATION LIST

PATENT LITERATURE

Patent Literature 1: JP H08-230407 A

SUMMARY OF INVENTION

TECHNICAL PROBLEM

The present invention aims to provide a rubber composition for a tire, capable of achieving a balanced improvement in breaking performance and fuel efficiency while simultaneously having excellent conductivity, and a pneumatic tire formed from the rubber composition.

SOLUTION TO PROBLEM

The present invention relates to a rubber composition for a tire, comprising a wet masterbatch that is obtained by mixing a rubber latex and a liquid dispersion of a conductive carbon black having a nitrogen adsorption specific surface area of not less than 900 m$^2$/g and a DBP oil absorption of not less than 300 ml/100 g, wherein the wet masterbatch contains 1 to 15 parts by mass of the conductive carbon black per 100 parts by mass of a rubber component in the wet masterbatch.
The wet masterbatch preferably further contains carbon black.
The conductive carbon black preferably has a volatile matter content of not less than 0.6% by mass.
The rubber latex is preferably a styrene-butadiene rubber latex.
The rubber composition preferably comprises not more than 60% by mass of the wet masterbatch.
The wet masterbatch contains 1 to 15 parts by mass of the conductive carbon black per 100 parts by mass of a rubber component in the wet masterbatch.
The wet masterbatch is preferably obtained by further mixing with oil.
The rubber composition preferably has a volume resistivity of not more than $1.0 \times 10^7$ Ω·cm.
The rubber composition is preferably a rubber composition for a tire cord topping.
The present invention also relates to a pneumatic tire, formed from the rubber composition.
The present invention also relates to a pneumatic tire, comprising a rubberized tire cord component formed from the rubber composition. The rubberized tire cord component is preferably at least one of a carcass and a jointless band.
The pneumatic tire preferably comprises a sidewall having a volume resistivity of not less than $1.0 \times 10^9$ Ω·cm.

ADVANTAGEOUS EFFECTS OF INVENTION

A rubber composition for a tire of the present invention includes a wet masterbatch that is obtained by mixing a rubber latex and a liquid dispersion of a conductive carbon black having a nitrogen adsorption specific surface area of not less than 900 m$^2$/g and a DBP oil absorption of not less than 300 ml/100 g, wherein the wet masterbatch contains 1 parts by mass or more of the conductive carbon black per 100 parts by mass of a rubber component in the wet masterbatch. Therefore, the rubber composition enables a balanced improvement in breaking performance and fuel efficiency while having good conductivity.

DESCRIPTION OF EMBODIMENTS

The rubber composition for a tire of the present invention includes a wet masterbatch that is obtained by mixing a rubber latex and a liquid dispersion of a conductive carbon black having a nitrogen adsorption specific surface area of not less than 900 m$^2$/g and a DBP oil absorption of not less than 300 ml/100 g, wherein the wet masterbatch contains 1 to 15 parts by mass of the conductive carbon black per 100 parts by mass of a rubber component in the wet masterbatch.
By using a wet masterbatch prepared from a rubber latex and a conductive carbon black having a high nitrogen adsorption specific surface area and a high DBP oil absorption, the interaction between the conductive carbon black and the rubber component in the rubber latex is increased, and, further, the handleability of the conductive carbon black is enhanced. For this reason, the conductive carbon black is sufficiently dispersed in the rubber component, whereby good conductivity can be ensured and, at the same time, breaking performance and fuel efficiency can be significantly improved. Therefore, the property balance among conductivity, breaking performance and fuel efficiency can be synergistically improved while providing good handleability.
In particular, when the wet masterbatch is prepared using styrene-butadiene rubber (SBR) latex as the rubber latex, conductivity is greatly increased compared with when the masterbatch is prepared by dry mixing, and the aforementioned properties are significantly improved. Since SBR contains styrene moieties and has an electron withdrawing effect on carbon graphite, it easily incorporates carbon black by nature. Thus, for example, when a wet masterbatch previously prepared from SBR latex and conductive carbon black is used in an incompatible NR/SBR compound, the SBR phase, into which the conductive carbon black is selectively incorporated, forms a conductive path and exhibits high conductivity.

<Wet masterbatch>

The wet masterbatch in the present invention may be prepared by any method, for example, by mixing a rubber latex and a liquid dispersion of a conductive carbon black having the predetermined nitrogen adsorption specific surface area and DBP oil absorption, followed by coagulating and drying the mixture.

(Rubber latex)

Examples of rubber latexes include, but are not limited to, natural rubber latex, synthetic diene rubber latexes (latexes of polybutadiene rubber (BR), styrene-butadiene rubber (SBR), styrene-isoprene-butadiene rubber (SIBR), acrylonitrile-butadiene rubber, ethylene vinyl acetate rubber, chloroprene rubber, vinyl pyridine rubber, butyl rubber, and the like). Commercial products may be used. These may be used alone, or two or more of these may be used in combination. In particular, SBR latex, and latexes of isoprene-based rubbers such as NR, ENR and IR are preferred because they are excellent in breaking performance, fuel efficiency, adhesion to cords, and the like. It is more preferred to use at least SBR latex in the rubber component of the wet masterbatch because it is incompatible with isoprene-based rubbers.
The SBR in the SBR latex preferably has a vinyl content of not less than 5% by mass, more preferably not less than 15% by mass. If the vinyl content is less than 5% by mass, heat resistance tends to decrease. The vinyl content is preferably not more than 50% by mass, and more preferably not more than 25% by mass. If the vinyl content is more than 50% by mass, breaking energy tends to decrease. The vinyl content in SBR can be measured by infrared absorption spectrum analysis.
The SBR in the SBR latex preferably has a styrene content of not less than 20% by mass, more preferably not less than 30% by mass. If the styrene content is less than 20% by mass, breaking energy tends to decrease. The styrene content is preferably not more than 60% by mass, and more preferably not more than 45% by mass. If the styrene content is more than 60% by mass, the resulting rubber composition tends to become hard at low temperatures and undergo brittle fracture, and also to have higher heat build-up.
The styrene content in SBR is calculated by $^1$H-NMR measurement.
The concentration of the rubber component (rubber solids) in the SBR latex is not particularly limited, and is preferably 20 to 80% by mass, and more preferably 30 to 60% by mass, based on the rubber latex (100% by mass), in view of the uniform dispersibility of the rubber component in the rubber latex.

(Liquid dispersion of conductive carbon black)

The liquid dispersion of the conductive carbon black in the present invention refers to a liquid dispersion in which a conductive carbon black having the predetermined nitrogen adsorption specific surface area and DBP oil absorption is dispersed. Specifically, the liquid dispersion may be, for example, a liquid dispersion in which the conductive carbon black is dispersed in an aqueous medium. The use of such a liquid dispersion allows mixing of a polymer (rubber molecules) and the conductive carbon black in a liquid, whereby good dispersibility of the conductive carbon black can be obtained.

The nitrogen adsorption specific surface area ($N_2SA$) of the conductive carbon black is not less than 900 $m^2$/g, preferably not less than 1000 $m^2$/g, and more preferably not less than 1050 $m^2$/g. If the $N_2SA$ is less than 900 $m^2$/g, conductivity tends not to be sufficiently obtained. Also, the $N_2SA$ is preferably not more than 1200 $m^2$/g, more preferably not more than 1150 $m^2$/g, and still more preferably not more than 1100 $m^2$/g. If the $N_2SA$ is more than 1200 $m^2$/g, fuel efficiency tends to deteriorate; in addition, dispersibility tends to become so poor that breaking performance and durability can be reduced.

The dibutyl phthalate (DBP) oil absorption of the conductive carbon black is not less than 300 ml/100 g, preferably not less than 350 ml/100 g. If the DBP oil absorption is less than 300 ml/100 g, conductivity tends not to be sufficiently obtained. The DBP oil absorption is preferably not more than 600 ml/100 g, more preferably not more than 500 ml/100 g, and still more preferably not more than 400 ml/100 g. If the DBP oil absorption is more than 600 ml/100 g, breaking performance and durability tend to decrease.

The volatile matter content in the conductive carbon black is preferably not less than 0.6% by mass, more preferably not less than 0.8% by mass, and still more preferably not less than 0.9% by mass. If the volatile matter content is less than 0.6% by mass, the interaction with rubber may become so weak that dispersibility, fuel efficiency, and breaking performance can be deteriorated. Also, the upper limit of the volatile matter content is not particularly limited, and is preferably not more than 2.0% by mass, and more preferably not more than 1.5% by mass.

The iron content in the conductive carbon black is preferably not less than 60 ppm, more preferably not less than 300 ppm, still more preferably not less than 800 ppm, and particularly preferably not less than 1000 ppm. The iron content is preferably not more than 3000 ppm, more preferably not more than 2000 ppm, and particularly preferably not more than 1500 ppm.

The iron content in conductive carbon black herein can be measured by an inductively coupled plasma (ICP) optical emission spectrometer.

The aqueous medium may be water, alcohol, or the like. In particular, water is preferably used.

The liquid dispersion of the conductive carbon black can be prepared by a known method, for example, by using a high-pressure homogenizer, an ultrasonic homogenizer, a colloid mill or the like. Specifically, the liquid dispersion may be prepared by charging a colloid mill with an aqueous medium, adding the conductive carbon black while stirring, and then circulating the resulting mixture, optionally with a surfactant, using a homogenizer. The concentration of filler in the liquid dispersion (100% by mass) is not particularly limited, and is preferably 0.5 to 10% by mass, and more preferably 3 to 7% by mass, in view of the uniform dispersibility of filler in the liquid dispersion.

As is mentioned in the above method of preparing the liquid dispersion, a surfactant may appropriately be added to the liquid dispersion of the conductive carbon black in terms of dispersibility. The surfactant is not particularly limited, and may appropriately be any known anionic surfactant, nonionic surfactant, amphoteric surfactant, or the like. The amount of the surfactant to be added in the liquid dispersion (100% by mass) is not particularly limited, and is preferably 0.01 to 3% by mass, and more preferably 0.05 to 1% by mass, in view of the uniform dispersibility of filler in the liquid dispersion.

(Liquid dispersion of carbon black)

Although the liquid dispersion of the conductive carbon black is used in the preparation of the wet masterbatch, a liquid dispersion of a filler other than the conductive carbon black may optionally be added. Specifically, a liquid dispersion in which another filler is dispersed in an aqueous medium may be used, for instance. The use of such a liquid dispersion allows mixing of a polymer (rubber molecules) and the filler in a liquid, whereby good filler dispersibility can be obtained.

The other filler may preferably be carbon black or the like. The effects of the present invention can be remarkably achieved by adding carbon black in addition to the conductive carbon black. Examples of carbon black include GPF, FEF, HAF, ISAF, and SAF. HAF, ISAF, and SAF are preferred in view of their ability to provide reinforcement to the rubber composition for a tire cord topping, and the like.

The nitrogen adsorption specific surface area ($N_2SA$) of the carbon black is preferably not less than 20 m$^2$/g. If the $N_2SA$ is less than 20 m$^2$/g, the reinforcing properties tend to be reduced and thus breaking performance tends to decrease. Also, the $N_2SA$ is not more than 110 m$^2$/g, preferably not more than 100 m$^2$/g, and more preferably not more than 90 m$^2$/g. If the $N_2SA$ is more than 110 m$^2$/g, fuel efficiency tends to deteriorate, and dispersibility tends to become so poor that breaking performance and durability can be reduced.

The dibutyl phthalate (DBP) oil absorption of the carbon black is not less than 60 ml/100 g, preferably not less than 70 ml/100 g. If the DBP oil absorption is less than 60 ml/100 g, the reinforcing properties tend to be reduced and thus breaking performance tends to decrease. Also, the DBP oil absorption is not more than 130 ml/100 g, preferably not more than 120 ml/100 g. If the DBP oil absorption is more than 130 ml/100 g, tensile elongation at break tends to deteriorate and thus breaking performance and durability tend to decrease.

The liquid dispersion of the carbon black may be prepared in the same way as in the preparation of the liquid dispersion of the conductive carbon black, using a similar aqueous medium and, if necessary, a similar surfactant and the like, except that the carbon black is used instead of the conductive carbon black.

In the present invention, the $N_2SA$, the DBP oil absorption, and the volatile matter content of the conductive carbon black and the carbon black are measured in accordance with JIS K 6217-2:2001, JIS K 6217-4:2001, and JIS K 6221:1982, respectively.

(Softener)

If necessary, a softener may be further added in the preparation of the wet masterbatch. The effects of the present invention can be better achieved by adding a softener.

Examples of softeners include oils, C5 petroleum resins, and C9 petroleum resins. Preferred among these are oils.

The oils include petroleum oils for improving rubber processability (e.g. softening effect, component-dispersing effect, the effect of lubrication between polymer chains). Specific examples of the oil include paraffinic process oils, naphthenic process oils, and aromatic process oils, as well as alternative aromatic oils such as treated distillate aromatic extracts (TDAEs) and solvent residue aromatic extracts (SRAEs), and mild extraction solvates (MESs). Preferred among these are alternative aromatic oils such as TDAEs and SRAEs.

Examples of C5 petroleum resins include aliphatic petroleum resins made mainly from olefins and diolefins in C5 fraction obtained by naphtha cracking. Examples of C9 petroleum resins include aromatic petroleum resins made mainly from vinyltoluene, indene, and methylindene in C9 fraction obtained by naphtha cracking.

The C5 and C9 petroleum resins each preferably have a softening point of 50°C or higher, more preferably 80°C or higher. Also, the softening point is preferably 150°C or lower, and more preferably 130°C or lower. With a softening point falling within the range mentioned above, the effects of the present invention can be better achieved.

(Mixing)

As described above, the wet masterbatch may be prepared, for example, by mixing the rubber latex and the liquid dispersion of the conductive carbon black, and, if necessary, the liquid dispersion of the carbon black, and/or the softener, and subsequently coagulating and drying the mixture. The mixing of the rubber latex and the liquid dispersion of the conductive carbon black, and, if necessary, the liquid dispersion of the carbon black, and/or the softener may be performed by any known method. For example, mention may be made of a method in which a blender mill is charged with the rubber latex, and then the liquid dispersion of the conductive carbon black, the liquid dispersion of the carbon black, and the softener are added dropwise while stirring; or a method in which the rubber latex is added dropwise to a mixture of the liquid dispersion of the conductive carbon black, the liquid dispersion of the carbon black, and the softener while stirring. Alternatively, for example, a flow of the rubber latex and a flow of the liquid dispersion of the conductive carbon black in a constant flow ratio, and, if necessary, the liquid dispersion of the carbon black, and/or the softener may be vigorously mixed under hydraulic stirring.

(Coagulation)

After the mixing step, coagulation is usually carried out, and this coagulation step is typically performed by adding a coagulant such as an acid compound (e.g. formic acid, sulfuric acid) or sodium chloride. In cases where coagulation occurs through the mixing, no coagulant may be used.

(Drying)

After coagulation, the resulting coagulum is usually recovered and dehydrated by centrifugation or the like, followed by washing and drying to give the wet masterbatch. The dryer used for drying may be, for example, a vacuum dryer, an air dryer, a drum dryer, a band dryer, a hot air dryer, or a kiln dryer.

(Composition of wet masterbatch)

The wet masterbatch preferably contains 1 to 15 parts by mass of the conductive carbon black per 100 parts by mass of the rubber component in the wet masterbatch. If the amount of the conductive carbon black is less than 1 part by mass, its conductivity may not be sufficiently exerted. If the amount of the conductive carbon black is more than 15 parts by mass, breaking performance may be adversely affected to a significant extent. The lower limit of the amount of the conductive carbon black is more preferably not less than 2 parts by mass, and the upper limit thereof is more preferably not more than 12 parts by mass, and still more preferably not more than 10 parts by mass.

The wet masterbatch preferably contains 30 to 150 parts by mass of the carbon black per 100 parts by mass of the rubber component in the wet masterbatch. If the amount of the carbon black is less than 30 parts by mass, the carbon black may not be sufficiently dispersed in the rubber composition prepared therefrom. If the amount of the carbon black is more than 150 parts by mass, the wet masterbatch may be so hard that the processability of the rubber composition can be extremely reduced. The lower limit of the amount of the carbon black is more preferably not less than 35 parts by mass, and the upper limit thereof is more preferably not more than 100 parts by mass, and still more preferably not more than 70 parts by mass.

The wet masterbatch preferably contains 1 to 50 parts by mass, more preferably 3 to 40 parts by mass of a softener per 100 parts by mass of the rubber component in the wet masterbatch. With the amount of the softener falling within the range mentioned above, the effects of the present invention can be better achieved.

<Rubber composition>

The rubber composition for a tire of the present invention includes the wet masterbatch. The amount of the wet masterbatch based on 100% by mass of the rubber composition for a tire is not less than 10% by mass and more preferably not less than 20% by mass. Also, the upper limit of the amount of the wet masterbatch is not more than 60% by mass, and more preferably not more than 50% by mass. The effects of the present invention can be well achieved by adding such an amount of the wet masterbatch.

The rubber composition of the present invention may include, if necessary, other rubber materials, in addition to the rubber component in the wet masterbatch. Examples of rubber materials that can be used in the rubber component include diene rubbers such as isoprene-based rubbers, polybutadiene rubber (BR), styrene-butadiene rubber (SBR), and styrene-isoprene-butadiene rubber (SIBR). These may be used alone, or two or more of these may be used in combination. In terms of achieving a balanced improvement in handling stability, fuel efficiency, elongation at break, adhesion to fiber cords, processability, and reversion resistance, the other rubber material used in addition to the rubber component in the wet masterbatch is preferably an isoprene-based rubber or SBR, and more preferably a combination of an isoprene-based rubber and SBR.

Examples of isoprene-based rubbers include natural rubber (NR), polyisoprene rubber (IR), and epoxidized natural rubber (ENR). NR is preferred among these in view of its excellent properties such as excellent tire durability and adhesion to fiber cords.

The NR may be one commonly used in the tire industry, such as SIR20, RSS#3, and TSR20. The IR and ENR may be any one commonly used in the tire industry.

The total isoprene-based rubber content based on 100% by mass of the total rubber component in the rubber composition is preferably not less than 40% by mass, and more preferably not less than 60% by mass. If the total content is less than 40% by mass, elongation at break, fuel efficiency, adhesion to fiber cords, processability, and tire durability may not be sufficiently obtained. The total isoprene-based rubber content is also preferably not more than 90% by mass, and more preferably not more than 80% by mass. If the total content is more than 90% by mass, handling stability and reversion resistance may not be sufficiently obtained.

The SBR is not particularly limited, and may be a conventional solution polymerized SBR, emulsion polymerized SBR, or the like.

The total SBR content based on 100% by mass of the total rubber component in the rubber composition is preferably not less than 10% by mass, and more preferably not less than 20% by mass. If the total content is less than 10% by mass, handling stability and reversion resistance may not be sufficiently obtained. The total SBR content is also preferably not more than 60% by mass, and more preferably not more than 40% by mass. If the total content is more than 60% by mass, elongation at break, fuel efficiency and processability, and even tire durability may not be sufficiently obtained.

The sum of the isoprene-based rubber content and the SBR content, based on 100% by mass of the total rubber component in the rubber composition, is preferably not less than 80% by mass, and more preferably not less than 90% by mass, and may be 100% by mass. If the sum of the contents is less than 80% by mass, a good property balance between tensile strength at break and fuel efficiency may not be obtained.

In addition to the conductive carbon black and carbon black contained in the wet masterbatch, the rubber composition of the present invention may further contain, if necessary, the conductive carbon black and carbon black.

The total amount of the conductive carbon black contained in the rubber composition, when expressed per 100 parts by mass of the total rubber component, is preferably not less than 0.1 parts by mass, and more preferably not less than 0.5 parts by mass. If the total amount is less than 0.1 parts by mass, good conductivity may not be obtained, and excellent breaking performance and fuel efficiency may not be achieved. Also, the total amount is preferably not more than 5 parts by mass, and more preferably not more than 3 parts by mass. If the total amount is more than 5 parts by mass, breaking performance tends to decrease.

Here, the conductive carbon black is preferably present in the wet masterbatch in an amount of not less than 80% by mass, more preferably not less than 90% by mass, and still more preferably 100% by mass, based on a total of 100% by mass of the conductive carbon black used in the rubber composition of the present invention.

The total amount of the carbon black contained in the rubber composition, when expressed per 100 parts by mass of the total rubber component, is preferably not less than 20 parts by mass, and more preferably not less than 30 parts by mass. If the total amount is less than 20 parts by mass, good strength may not be ensured. Also, the total amount is preferably not more than 70 parts by mass, and more preferably not more than 60 parts by mass. If the total amount is more than 70 parts by mass, tan $\delta$ (rolling resistance properties) and breaking performance tend to deteriorate.

Here, the carbon black is preferably present in the wet masterbatch in an amount of not less than 10% by mass, more preferably not less than 30% by mass, based on a total of 100% by mass of the carbon black used in the rubber composition of the present invention. The upper limit of the amount is not particularly limited, and is preferably not more than 90% by mass, and more preferably not more than 80% by mass.

In the rubber composition, the blending ratio of the conductive carbon black to the carbon black [(conductive carbon black)/(carbon black) (mass ratio)] is preferably 0.1/99.9 to 15/85, and more preferably 1/99 to 10/90. If the blending ratio is less than 0.1/99.9, good conductivity may not be obtained, and excellent breaking performance and fuel efficiency may not be achieved. Also, if the blending ratio is more than 15/85, breaking performance tends to decrease.

In addition to the softener contained in the wet masterbatch, the rubber composition of the present invention may further contain, if necessary, the softener.

The total amount of the softener contained in the rubber composition, when expressed per 100 parts by mass of the total rubber component, is preferably not less than 1 part by mass, and more preferably not less than 5 parts by mass. The total amount is preferably not more than 20 parts by mass, and more preferably not more than 15 parts by mass. With the amount of the softener falling within the range mentioned above, the effects of the present invention can be better achieved.

Here, the softener is preferably present in the wet masterbatch in an amount of not less than 50% by mass, more preferably not less than 60% by mass, based on a total of 100% by mass of the softener used in the rubber composition of the present invention.

In addition to the above-described ingredients, the rubber composition of the present invention may appropriately contain other additives generally used to prepare rubber compositions. Examples of other additives include reinforcing fillers such as silica, clay and talc, silane coupling agents, zinc oxide, stearic acid, processing aids, various antioxidants, waxes, vulcanizing agents such as sulfur, and vulcanization accelerators.

The rubber composition for a tire of the present invention may be prepared by a known method, for example, by mixing the wet masterbatch and other ingredients with a rubber mixing machine such as an open roll mill, a Banbury mixer, or an internal mixer, and then vulcanizing the resultant mixture.

The rubber composition for a tire of the present invention preferably has a volume resistivity measured at 100 V of not more than $1.0 \times 10^7$ $\Omega \cdot$cm, more preferably not more than $0.5 \times 10^7$ $\Omega \cdot$cm, and still more preferably not more than $0.18 \times 10^7$ $\Omega \cdot$cm. The volume resistivity herein can be measured by the method described later in the examples.

The rubber composition of the present invention can be suitably used as a rubber composition for a tire cord topping in order to coat tire cords to form a rubberized tire cord component. In particular, the rubber composition can be suitably used in a carcass topping rubber and a jointless band topping rubber in order to coat tire cords to form a carcass and a jointless band, respectively.

The carcass refers to a component formed from tire cords and a tire cord topping rubber layer. Specifically, it is a component shown in Fig. 1 of JP-A 2008-75066 (which is incorporated by reference in the entirety), for example.

The jointless band refers to a component formed from tire cords and a tire cord topping rubber layer. It is disposed on the outside of a breaker in the radial direction of the tire in order to suppress the separation of the breaker from the carcass due to the centrifugal force caused by the rotation of the tire during the driving of the vehicle. Specifically, it is a component shown in Fig. 3 of JP-A 2009-007437 (which is incorporated by reference in the entirety), for example.

The carcass in the present invention can be prepared by a conventional method, for example, by topping of the unvulcanized rubber composition for a tire cord topping on the top and bottom of a plurality of carcass cords stretched and arranged in parallel with each other. The carcass cord may be a conventional one, and examples thereof include textile cords (fiber cords) made of organic fibers such as polyester, and steel cords made of steel. Also, the band or the like in the present invention can be prepared by a conventional method, and known band cords or the like may be used.

<Pneumatic tire>

The pneumatic tire of the present invention may suitably include a component (e.g. carcass, band) prepared using the rubber composition, and optionally a sidewall having a volume resistivity measured at 100 V of not less than $1.0 \times 10^9$ Ω·cm. The sidewall can be prepared from a rubber composition for a sidewall having such a volume resistivity. The rubber composition for a sidewall may have any formulation with the above volume resistivity, such as a high silica content rubber compound.

The pneumatic tire of the present invention can be manufactured using the above rubber composition by a conventional method. Specifically, the additives are mixed to prepare a kneaded mixture; carcass cords, band cords or the like are coated with the kneaded mixture, formed into the shape of a carcass, band or the like and assembled with other tire components on a tire building machine, and then vulcanized, whereby a tire of the present invention can be manufactured.

The pneumatic tire of the present invention can be suitably used as tires for passenger cars, trucks and buses, and the like.

EXAMPLES

The present invention will now be described in more detail with reference to the following examples. However, the present invention is not only limited to the examples.

Hereinafter, chemicals used in Preparations of liquid dispersions of conductive carbon blacks, a carbon black, and a fine particle carbon black and Production Examples 1 to 9 are listed.

SBR latex: LX110 (E-SBR, vinyl content: 18% by mass, styrene content: 37.5% by mass, concentration of rubber component in rubber latex: 40.5% by mass) produced by ZEON CORPORATION

Carbon black (CB): DIABLACK H (N330, $N_2SA$: 79 $m^2/g$, DBP: 105 ml/100 g) produced by Mitsubishi Chemical Corp. Fine particle carbon black (fine particle CB): SHOBLACK N134 ($N_2SA$: 148 $m^2/g$, DBP: 123 ml/100 g) produced by Cabot Japan K.K.

Conductive carbon black (1) (Lionite): LIONITE CB ($N_2SA$: 1052 $m^2/g$, DBP: 378 ml/100 g, volatile matter content: 1.0% by mass, iron content: 1330 ppm) produced by Lion Corporation

Conductive carbon black (2) (Ketjen): Ketjen Black EC300J ($N_2SA$: 800 $m^2/g$, DBP: 365 ml/100 g, volatile matter content: 0.4% by mass) produced by Lion Corporation Conductive carbon black (3) (Printex): PRINTEX XE2B ($N_2SA$: 1000 $m^2/g$, DBP: 420 ml/100 g, volatile matter content: 1.2% by mass) produced by Degussa

DEMOL N: Surfactant DEMOL N (sodium salt of β-naphthalenesulfonic acid-formalin condensate, anionic surfactant) produced by Kao Corporation

Oil: TDAE produced by H&R

(Preparation of liquid dispersion of conductive carbon black (1))

An amount of 1900 g of deionized water and 100 g of conductive carbon black (1) were put into a colloid mill with a 30-mm-diameter rotor, and stirred with a rotor/stator gap of 1 mm at a rotation speed of 2000 rpm for 10 minutes. DEMOL N was subsequently added to a concentration of 0.05% by mass. The mixture was circulated three times using a pressure homogenizer. Thus, a liquid dispersion of conductive carbon black (1) was prepared.

(Preparation of liquid dispersion of conductive carbon black (2))

A liquid dispersion of conductive carbon black (2) was prepared in the same manner as above, except that conductive carbon black (2) was used instead of the conductive carbon black (1).

(Preparation of liquid dispersion of conductive carbon black (3))

A liquid dispersion of conductive carbon black (3) was prepared in the same manner as above, except that conductive carbon black (3) was used instead of the conductive carbon black (1).

(Preparation of liquid dispersion of carbon black)

A liquid dispersion of a carbon black was prepared in the same manner as above, except that the carbon black was used instead of the conductive carbon black (1).

(Preparation of liquid dispersion of fine particle carbon black)

A liquid dispersion of a fine particle carbon black was prepared in the same manner as above, except that the fine particle carbon black was used instead of the conductive carbon black (1).

(Production Example 1: wet masterbatch (1))

SBR latex, the liquid dispersion of conductive carbon black (1), and the liquid dispersion of a carbon black were mixed to prepare an uniform solution having a solid ratio (by mass) of (rubber component):(conductive carbon black (1)):(carbon black) of 100:3.3:50. Then, sulfuric acid was added to the resulting solution while stirring, to adjust the pH of the solution to 5 so that the solution was coagulated. The resulting solids were filtered to recover the rubber fraction, which was then washed with pure water until the pH of the liquid after washing (wash water) reached 7, and dried. Thus, a wet masterbatch (1) was prepared.

(Production Example 2: wet masterbatch (2))

A wet masterbatch (2) was prepared in the same manner as in Production Example 1, except that the solid ratio (by mass) of (rubber component):(conductive carbon black (1)):(carbon black) was 100:1.65:50.

(Production Example 3: wet masterbatch (3))

A wet masterbatch (3) was prepared in the same manner as in Production Example 1, except that SBR latex, the liquid dispersion of conductive carbon black (2), and the liquid dispersion of a carbon black were mixed so that the solid ratio (by mass) of (rubber component):(conductive carbon black (2)):(carbon black) was 100:3.3:50.

(Production Example 4: wet masterbatch (4))

A wet masterbatch (4) was prepared in the same manner as in Production Example 1, except that the SBR latex, the liquid dispersion of conductive carbon black (1), the liquid dispersion of a carbon black, and an oil were mixed so that the dry mass ratio of (rubber component (solid content)):(conductive carbon black (1) (solid content)):(carbon black (solid content)):oil was 100:5:54:25.

(Production Example 5: wet masterbatch (5))

A wet masterbatch (5) was prepared in the same manner as in Production Example 1, except that the SBR latex, the liquid dispersion of conductive carbon black (1), the liquid dispersion of a carbon black, and an oil were mixed so that the dry mass ratio of (rubber component (solid content)):(conductive carbon black (1) (solid content)):(carbon black (solid content)):oil was 100:8:42:26.

(Production Example 6: wet masterbatch (6))

A wet masterbatch (6) was prepared in the same manner as in Production Example 1, except that the SBR latex, the liquid dispersion of conductive carbon black (1), the liquid dispersion of a carbon black, and an oil were mixed so that the dry mass ratio of (rubber component (solid content)):(conductive carbon black (1) (solid content)):(carbon black (solid content)):oil was 100:10:36:27.

(Production Example 7: wet masterbatch (7))

A wet masterbatch (7) was prepared in the same manner as in Production Example 1, except that the SBR latex, the liquid dispersion of conductive carbon black (1), the liquid dispersion of a carbon black, and an oil were mixed so that the dry mass ratio of (rubber component (solid content)):(conductive carbon black (1) (solid content)):(carbon black (solid content)):oil was 100:12:42:31.

(Production Example 8: wet masterbatch (8))

A wet masterbatch (8) was prepared in the same manner as in Production Example 1, except that the SBR latex, the liquid dispersion of a fine particle carbon black, and the liquid dispersion of a carbon black were mixed so that the solid ratio (by mass) of (rubber component):(fine particle carbon black (solid content)):(carbon black) was 100:17:50.

(Production Example 9: wet masterbatch (9))

A wet masterbatch (9) was prepared in the same manner as in Production Example 1, except that the SBR latex, the liquid dispersion of conductive carbon black (3), the liquid dispersion of a carbon black, and an oil were mixed so that the dry mass ratio of (rubber component (solid content)):(conductive carbon black (3) (solid content)):(carbon black (solid content)):oil was 100:8:42:26.

Hereinafter, chemicals used in examples and comparative examples are listed.

NR: TSR20

SBR: Nipol 1502 (E-SBR, vinyl content: 18% by mass, styrene content: 23.5%) produced by ZEON CORPORATION

Carbon black (CB): DIABLACK H (N330, $N_2SA$: 79 m$^2$/g, DBP: 105 ml/100 g) produced by Mitsubishi Chemical Corp. Fine particle carbon black (fine particle CB): SHOBLACK N134 ($N_2SA$: 148 m$^2$/g, DBP: 123 ml/100 g) produced by Cabot Japan K.K.

Conductive carbon black (1) (Lionite): LIONITE CB ($N_2SA$: 1052 m$^2$/g, DBP: 378 ml/100 g, volatile matter content 1.0% by mass) produced by Lion Corporation

Conductive carbon black (2) (Ketjen): Ketjen Black EC300J ($N_2SA$: 800 m$^2$/g, DBP: 365 ml/100 g, volatile matter content: 0.4% by mass) produced by Lion Corporation Conductive carbon black (3) (Printex): PRINTEX XE2B ($N_2SA$: 1000 m$^2$/g, DBP: 420 ml/100 g, volatile matter content: 1.2% by mass) produced by Degussa

Wet masterbatch (1): Production Example 1
Wet masterbatch (2): Production Example 2
Wet masterbatch (3): Production Example 3
Wet masterbatch (4): Production Example 4
Wet masterbatch (5): Production Example 5
Wet masterbatch (6): Production Example 6
Wet masterbatch (7): Production Example 7
Wet masterbatch (8): Production Example 8
Wet masterbatch (9): Production Example 9
Zinc oxide: Zinc oxide produced by Mitsui Mining & Smelting Co., Ltd.
Antioxidant: OZONONE 6C (N-(1,3-dimethylbutyl)-N'-phenyl-p-phenylenediamine) produced by Seiko Chemical Co., Ltd. Oil: Diana Process AH-24 (aromatic oil) produced by Idemitsu Kosan Co., Ltd.
Stearic acid: TSUBAKI produced by NOF Corporation
Sulfur: Sulfur powder produced by Tsurumi Chemical Industry Co., Ltd.
Vulcanization accelerator: NOCCELER NS (N-tert-butyl-2-benzothiazolylsulfenamide) produced by Ouchi Shinko Chemical Industrial Co., Ltd.

<Examples and Comparative Examples>

According to each of the formulations shown in Tables 1 and 2, the materials other than the sulfur and the vulcanization accelerator were mixed with a Banbury mixer at 160°C for 3 minutes to provide a kneaded mixture. To the kneaded mixture were added the sulfur and the vulcanization accelerator, and they were mixed with an open two-roll mill at 80°C for 5 minutes to provide an unvulcanized rubber composition. The unvulcanized rubber composition was press vulcanized at 170°C for 12 minutes to prepare a vulcanized rubber composition.

<Evaluation items and testing methods>

(Handleability (amount of fine powder))

The conductive carbon blacks and the wet masterbatches containing the conductive carbon blacks were measured for the amount of fine powder having a size of less than 125 μm after 5 minutes of sieving in accordance with JIS K 6219. A smaller amount of fine powder indicates that the carbon black particles have higher cohesiveness and thus better handleability.

(Conductivity)

2-mm-thick test pieces (15 cm $\times$ 15 cm) were prepared from the vulcanized rubber compositions, and the volume resistivity of each rubber composition was measured using an instrument R8340A for measuring electrical resistance (produced by ADVANTEST CORPORATION) at an applied voltage of 100 V under constant temperature and humidity conditions (temperature: 25°C, relative humidity: 50%) with other conditions as set forth in JIS K 6217:2008. A lower value indicates that the rubber composition has a lower volume resistivity and thus better conductivity.

(Breaking performance)

The tensile strength and the elongation at break of each vulcanized rubber composition (vulcanized rubber sheet) were determined in accordance with JIS K 6251. Then, a breaking energy was calculated as [(tensile strength) $\times$ (elongation at break)/2]. The breaking energy value is expressed as an index (breaking energy index) relative to that of Comparative Example 1 (=100), using the following equation. A higher index indicates better breaking performance. Indices of 97 or higher cause no problem for practical use.

```
(Breaking energy index) = (Breaking energy of each
formulation)/(Breaking energy of Comparative Example 1) ×
100
```

(Fuel efficiency)

The loss tangent (tan $\delta$) of each vulcanized rubber composition was measured using a viscoelasticity spectrometer VES (produced by Iwamoto Seisakusho Co., Ltd.) at a temperature of 50°C, an initial strain of 10%, and a dynamic strain of 2%. The tan $\delta$ value is expressed as an index relative to that of Comparative Example 1(=100), using the following equation. A higher index indicates better rolling resistance properties (fuel efficiency). Indices of 97 or higher cause no problem for practical use.

```
(Fuel efficiency index) = (tan δ of Comparative Example
1)/(tan δ of each formulation) × 100
```

(Total performance)

The total performance was calculated according to the equation below. A greater value indicates a better property balance among conductivity, breaking performance and fuel efficiency. Total performance values of 50 or greater cause no problem for practical use.

```
(Total performance) = (Breaking energy index) × (Fuel
efficiency index)/(Conductivity)/1000
```

[Table 1]

| | | Comparative Example 1 | Comparative Example 2 | Comparative Example 3 | Comparative Example 4 | Comparative Example 5 |
|---|---|---|---|---|---|---|
| Amount (part(s) by mass) | NR | 70 | 70 | 70 | 70 | 70 |
| | SBR | 30 | 30 | — | — | 30 |
| | Carbon black | 45 | 45 | 30 | 30 | 45 |
| | Conductive carbon black(1)(Lionite) | — | 1 | — | — | — |
| | Conductive carbon black(2)(Ketjen) | — | — | — | — | 1 |
| | Wet masterbatch (3) | — | — | 46 (30 SBR, 15 CB, 1 Ketjen) | — | — |
| | Wet masterbatch (8) | — | — | — | 50 (30 SBR, 15 CB, 5 Fine particle CB) | — |
| | Oil | 10 | 10 | 10 | 10 | 10 |
| | Antioxidant | 2 | 2 | 2 | 2 | 2 |
| | Stearic acid | 2 | 2 | 2 | 2 | 2 |
| | Zinc oxide | 5 | 5 | 5 | 5 | 5 |
| | Sulfur | 3 | 3 | 3 | 3 | 3 |
| | Vulcanization accelerator | 1 | 1 | 1 | 1 | 1 |
| Evaluation | Amount of fine powder (%) (property of conductive carbon black) | — | 4.1% | 0% | 0% | 17.1% |
| | Conductivity ($\times 10^7 \Omega \cdot cm$) | 1.3 | 0.19 | 0.41 | 1.02 | 0.55 |
| | Breaking performance index | 100 | 83 | 90 | 90 | 74 |
| | Fuel efficiency index | 100 | 97 | 96 | 98 | 94 |
| | Total performance | 8 | 42 | 21 | 9 | 13 |

[Table 2]

| | | Example 1 | Example 2* | Example 3 | Example 4 | Example 5 | Example 6 | Example 7 |
|---|---|---|---|---|---|---|---|---|
| Amount (part(s) by mass) | NR | 70 | 70 | 65 | 65 | 65 | 70 | 65 |
| | Carbon black | 30 | 30 | 26.25 | 29.25 | 28.25 | 27.25 | 29.25 |
| | Conductive carbon black(1)(Lionite) | — | 0.5 | — | — | — | — | — |
| | Wet masterbatch (1) | 46 (30 SBR, 15 CB, 1 Lionite) | — | — | — | — | — | — |
| | Wet masterbatch (2) | — | 45.5 (30 SBR, 15 CB, 0.5 Lionite) | — | — | — | — | — |
| | Wet masterbatch (4) | — | — | 64.25 (35 SBR, 18.75 CB, 1.75 Lionite, 8.75 Oil) | — | — | — | — |
| | Wet masterbatch (5) | — | — | — | 61.65 (35 SBR, 14.75 CB, 2.75 Lionite, 9.15 Oil) | — | — | — |
| | Wet masterbatch (6) | — | — | — | — | 60.4 (35 SBR, 12.5 CB, 3.5 Lionite, 9.4 Oil) | — | — |
| | Wet masterbatch (7) | — | — | — | — | — | 55.4 (30 SBR, 12.5 CB, 3.5 Lionite, 9.4 Oil) | — |
| | Wet masterbatch (9) | — | — | — | — | — | — | 61.65 (35 SBR, 14.75 CB, 2.75 Printex, 9.15 Oil) |
| | Oil | 10 | 10 | 1.25 | 1.25 | 1.25 | 1.25 | 1.25 |
| | Antioxidant | 2 | 2 | 2 | 2 | 2 | 2 | 2 |
| | Stearic acid | 2 | 2 | 2 | 2 | 2 | 2 | 2 |
| | Zinc oxide | 5 | 5 | 5 | 5 | 5 | 5 | 5 |
| | Sulfur | 3 | 3 | 3 | 3 | 3 | 3 | 3 |
| | Vulcanization accelerator | 1 | 1 | 1 | 1 | 1 | 1 | 1 |
| Evaluation | Amount of fine powder (%) (property of conuductive carbon black) | 0% | 0% | 0% | 0% | 0% | 0% | 0% |
| | Conductivity ($\times 10^7 \Omega \cdot cm$) | 0.09 | 0.18 | 0.014 | 0.007 | 0.01 | 0.013 | 0.009 |
| | Breaking performance index | 106 | 102 | 100 | 99 | 97 | 97 | 98 |
| | Fuel efficiency index | 99 | 100 | 97 | 98 | 100 | 101 | 97 |
| | Total performance | 117 | 57 | 693 | 1386 | 970 | 754 | 1056 |

\* not according to the invention

Tables 1 and 2 show that the use of a wet masterbatch prepared by mixing a rubber latex, a liquid dispersion of a specific conductive carbon black, and a liquid dispersion of carbon black provides excellent handleability. Further, it is apparent that rubber compositions prepared using such a masterbatch have excellent conductivity and, at the same time, provide significantly improved breaking performance and fuel efficiency; therefore, these properties are achieved at high levels while maintaining the balance between them.

13

Moreover, from the results of the evaluations of the conductivity, breaking performance (durability) and fuel efficiency of test tires prepared using each of the formulations in Examples 1 to 7 as a rubber composition for a carcass, in combination with a rubber composition for a sidewall having a volume resistivity measured at 100 V of not less than $1.0 \times 10^9$ Ω·cm, these test tires were also found to have excellent properties.

**Claims**

1.    A rubber composition for a tire, comprising a wet masterbatch that is obtained by mixing a rubber latex and a liquid dispersion of a conductive carbon black having a nitrogen adsorption specific surface area of not less than 900 m$^2$/g and a DBP oil absorption of not less than 300 ml/100 g, wherein the wet masterbatch contains 1 to 15 parts by mass of the conductive carbon black per 100 parts by mass of a rubber component in the wet masterbatch, wherein the amount of the wet masterbatch based on 100 % by mass of the rubber composition for a tire is 10 to 60 % by mass.

2.    The rubber composition for a tire according to claim 1,
wherein the wet masterbatch further contains carbon black.

3.    The rubber composition for a tire according to claim 1 or 2,
wherein the conductive carbon black has a volatile matter content of not less than 0.6% by mass.

4.    The rubber composition for a tire according to any one of claims 1 to 3,
wherein the rubber latex is a styrene-butadiene rubber latex.

5.    The rubber composition for a tire according to any one of claims 1 to 4,
wherein the wet masterbatch is obtained by further mixing with oil.

6.    The rubber composition for a tire according to any one of claims 1 to 5,
wherein the rubber composition has a volume resistivity of not more than $1.0 \times 10^7$ Ω·cm.

7.    The rubber composition for a tire according to any one of claims 1 to 6, which is a rubber composition for a tire cord topping.

8.    A pneumatic tire, formed from the rubber composition according to any one of claims 1 to 7.

9.    A pneumatic tire, comprising a rubberized tire cord component formed from the rubber composition according to any one of claims 1 to 7.

10.   The pneumatic tire according to claim 9,
wherein the rubberized tire cord component is at least one of a carcass and a jointless band.

11.   The pneumatic tire according to any one of claims 8 to 10, comprising a sidewall having a volume resistivity of not less than $1.0 \times 10^9$ Ω·cm.

12.   A method for producing a rubber composition for a tire according to any of claims 1 to 7, comprising a step of preparing a wet masterbatch by mixing a rubber latex and a liquid dispersion of a conductive carbon black having a nitrogen adsorption specific surface area of not less than 900 m$^2$/g and a DBP oil absorption of not less than 300 ml/100 g, wherein the wet masterbatch contains 1 to 15 parts by mass of the conductive carbon black per 100 parts by mass of a rubber component in the wet masterbatch.

**Patentansprüche**

1.    Kautschukzusammensetzung für einen Reifen, umfassend ein nasses Masterbatch, das durch Mischen eines Kautschuklatexes und einer flüssigen Dispersion eines leitfähigen Rußes mit einer spezifischen Stickstoffadsorptionsoberfläche von nicht weniger als 900 m$^2$/g und einer DBP-Ölabsorption von nicht weniger als 300 ml/100 g erhalten ist, wobei das nasse Masterbatch 1 bis 15 Masseteile des leitfähigen Rußes bezogen auf 100 Masseteile einer Kautschukkomponente in dem nassen Masterbatch enthält, wobei die Menge des nassen Masterbatches bezogen auf 100 Masse-% der Kautschukzusammensetzung für einen Reifen 10 bis 60 Masse-% beträgt.

**2.** Kautschukzusammensetzung für einen Reifen nach Anspruch 1, wobei das nasse Masterbatch ferner Ruß enthält.

**3.** Kautschukzusammensetzung für einen Reifen nach Anspruch 1 oder 2, wobei der leitfähige Ruß einen Gehalt an flüchtigen Bestandteilen von nicht weniger als 0,6 Masse-% aufweist.

**4.** Kautschukzusammensetzung für einen Reifen nach einem der Ansprüche 1 bis 3, wobei der Kautschuklatex ein Styrol-Butadien-Kautschuklatex ist.

**5.** Kautschukzusammensetzung für einen Reifen nach einem der Ansprüche 1 bis 4, wobei das nasse Masterbatch durch weiteres Mischen mit Öl erhalten ist.

**6.** Kautschukzusammensetzung für einen Reifen nach einem der Ansprüche 1 bis 5, wobei die Kautschukzusammensetzung einen spezifischen Volumenwiderstand von nicht mehr als $1,0 \times 10^7$ Ω·cm aufweist.

**7.** Kautschukzusammensetzung für einen Reifen nach einem der Ansprüche 1 bis 6, welche eine Kautschukzusammensetzung für eine Reifenkordgummierung ist.

**8.** Luftreifen, der aus der Kautschukzusammensetzung nach einem der Ansprüche 1 bis 7 gebildet ist.

**9.** Luftreifen, der eine gummierte Reifenkordkomponente umfasst, die aus der Kautschukzusammensetzung nach einem der Ansprüche 1 bis 7 gebildet ist.

**10.** Luftreifen nach Anspruch 9, wobei die gummierte Reifenkordkomponente eine Karkasse und/oder ein nahtloses Band ist.

**11.** Luftreifen nach einem der Ansprüche 8 bis 10, der eine Seitenwand mit einem spezifischen Volumenwiderstand von nicht weniger als $1,0 \times 10^9$ Ω·cm aufweist.

**12.** Verfahren zum Herstellen einer Kautschukzusammensetzung für einen Reifen nach einem der Ansprüche 1 bis 7, umfassend einen Schritt eines Zubereitens eines nassen Masterbatches durch Mischen eines Kautschuklatexes und einer flüssigen Dispersion eines leitfähigen Rußes mit einer spezifischen Stickstoffadsorptionsoberfläche von nicht weniger als 900 $m^2$/g und einer DBP-Ölabsorption von nicht weniger als 300 ml/100 g, wobei das nasse Masterbatch 1 bis 15 Masseteile des leitfähigen Rußes bezogen auf 100 Masseteile einer Kautschukkomponente in dem nassen Masterbatch enthält.

**Revendications**

**1.** Composition de caoutchouc pour un pneumatique, comprenant un mélange maître humide qui est obtenu en mélangeant un latex de caoutchouc et une dispersion liquide d'un noir de carbone conducteur ayant une superficie spécifique d'absorption d'azote qui n'est pas inférieure à 900 $m^2$/g et une absorption d'huile DBP qui n'est pas inférieure à 300 ml/100 g, dans laquelle le mélange maître humide contient de 1 à 15 parties en masse de noir de carbone conducteur pour 100 parties en masse d'un composant de caoutchouc dans le mélange maître humide, et dans laquelle la quantité de mélange maître humide, sur la base de 100 % en masse de la composition de caoutchouc pour un pneumatique, est de 10 à 60 % en masse.

**2.** Composition de caoutchouc pour un pneumatique selon la revendication 1,
dans lequel le mélange maître humide contient en outre du noir de carbone.

**3.** Composition de caoutchouc pour un pneumatique selon la revendication 1 ou 2,
dans lequel le noir de carbone conducteur comprend une teneur en matières volatiles qui n'est pas inférieure à 0,6 % en masse.

**4.** Composition de caoutchouc pour un pneumatique selon l'une quelconque des revendications 1 à 3,
dans laquelle le latex de caoutchouc est un latex de caoutchouc styrène-butadiène.

**5.** Composition de caoutchouc pour un pneumatique selon l'une quelconque des revendications 1 à 4,
dans laquelle le mélange maître humide est obtenu en mélangeant en outre avec de l'huile.

**6.** Composition de caoutchouc pour un pneumatique selon l'une quelconque des revendications 1 à 5, dans lequel la composition de caoutchouc a une résistivité volumétrique qui ne dépasse pas 1,0 x $10^7$ Ω·cm.

**7.** Composition de caoutchouc pour un pneumatique selon l'une quelconque des revendications 1 à 6, qui est une composition de caoutchouc pour un enrobage de câblés de pneumatique.

**8.** Bandage pneumatique, formé à partir de la composition de caoutchouc selon l'une quelconque des revendications 1 à 7.

**9.** Bandage pneumatique, comprenant un composant caoutchouté pour câblés de pneumatique, formé à partir de la composition de caoutchouc selon l'une quelconque des revendications 1 à 7.

**10.** Bandage pneumatique selon la revendication 9, dans lequel le composant caoutchouté pour câblés de pneumatique est au moins un élément parmi une carcasse et une bande sans jointure.

**11.** Bandage pneumatique selon l'une quelconque des revendications 8 à 10, comprenant une paroi latérale ayant une résistivité volumétrique qui n'est pas inférieure à 1,0 x $10^9$ W·cm.

**12.** Procédé pour produire une composition de caoutchouc pour un pneumatique selon l'une quelconque des revendications 1 à 7, comprenant
une étape consistant à préparer un mélange maître humide en mélangeant un latex de caoutchouc et une dispersion liquide d'un noir de carbone conducteur ayant une superficie spécifique d'absorption d'azote qui n'est pas inférieure à 900 m$^2$/g et une absorption d'huile DBP qui n'est pas inférieure à 300 ml/100 g, dans lequel le mélange maître hulide contient de 1 à 15 parties masse de noir de carbone conducteur pour 100 parties en masse d'un composant de caoutchouc dans le mélange maître humide.

## REFERENCES CITED IN THE DESCRIPTION

**Patent documents cited in the description**

- JP H08230407 A
- JP 2008075066 A
- JP 2009007437 A